# EUROPEAN PATENT SPECIFICATION

(11) **EP 3 060 600 B1**
(45) Date of publication and mention of the grant of the patent: **26.06.2019**
(21) Application number: 14793722.1
(22) Date of filing: 23.10.2014
(51) Int. Cl.: C08J 5/18, C08L 23/08, B32B 5/02, B32B 27/12, B32B 27/20, B32B 27/30, B32B 27/32, B32B 27/40, C08K 3/26, C08L 71/02

(54) **POLYOLEFIN BASED FILMS WITH IMPROVED WATER VAPOR TRANSMISSION RATES**
FOLIEN AUF POLYOLEFINBASIS MIT VERBESSERTEN WASSERDAMPFÜBERTRAGUNGSRATEN
FILMS À BASE DE POLYOLÉFINE À TAUX DE TRANSMISSION DE VAPEUR D'EAU AMÉLIORÉS

(30) Priority: 25.10.2013 US 201361895581 P
(43) Date of publication of application: 31.08.2016
(73) Proprietor: Dow Global Technologies Llc, Midland, MI 48674 (US)
(72) Inventor: SAAVEDRA, Jose V., Lake Jackson, TX 77566 (US); PATEL, Rajen M., Lake Jackson, TX 77566 (US); DEGROOT, Jacquelyn A., Texas 77566 (US); BENSASON, Selim, CH-8803 Rueschlikon (CH); LIN, Yijian, Manvel, TX 77578 (US); SMITH, Pamela Y., Rosharon, TX 77583 (US)
(74) Representative: Boult Wade Tennant LLP
(86) International application number: PCT/US2014/061860
(87) International publication number: WO 2015/061514

(56) References cited:
- EP-A1- 0 657 502
- EP-A1- 1 352 920
- WO-A2-02/085969
- US-A1- 2004 091 693

## Description

### Field of the Invention

This invention relates to films and more particularly to polyolefin-based films having medium to high water vapor transmission (WVT) rates. Such films are well suited for fresh produce packaging applications, breathable films used in baby diapers or adult incontinence products, breathable barrier surgical gowns and other hygiene and medical applications. Other applications include breathable building and construction films for house wrap and fabrics for protective garments or sports apparel. This formulation technology provides a Tunable level of WVTR based on selection and amount of the ingredients as well as film thickness.

### Background and Summary

EP 0657502 relates to a thermoplastic composition and its use in preparing films demonstrating moisture vapor permeability, while acting as barriers to liquids and microorganisms such as viruses and bacteria.

US 2004/091693 relates to breathable elastic multilayer film laminates having alternating layers of elastic and plastic polymers, and methods of making such laminates.

Water vapor permeable polyolefin films and coatings have utility in various applications. For example, films with medium to high water vapor transmission rates ("WVTR") are needed in order to help eliminate water droplet condensation on fruits or other produce which may lead to growth of fungus. Films for produce packaging should have WVTR higher than 50, preferably higher than 150, and more preferably higher than 300, and most preferably higher than 900 g/m²day depending upon application needs. For example, film having WV permeability coefficients of at least 150 g 25.4 µm/m² day (g mil/m² day) allows humidity to be released from packaged whole fruits deterring or eliminating fungus decay. Film thickness for such applications are typically from 25.4 to 127 µm (1 to 5 mil), preferably 25.4 to 76.2 µm (1 to 3 mil), and most preferably 25.4 to 50.8 µm (1 to 2 mils.

Such packaging films should also have sufficient toughness to withstand the rigors of handling and transportation, particularly where the film or coating is used as a package liner. For shelf display, the film should preferably have good optics. Good optical properties also allow the produce to be seen through the film to allow the consumer to see the quality and state of packaged fruits and/or vegetables.

Existing breathable film solutions for fresh produce include the use of low crystallinity polyolefins like AFFINITY™ polyolefin plastomers. While such solutions have gained acceptance in the marketplace, they typically have WVTR values of 30 to 50 g/m²day, even using plastomers having very low crystallinity (for example, 0.870g/cc). Films made with these resins also tend to be too tacky and too elastic, making them impractical for commercial use.

Films that provide a liquid barrier but high water vapor transmission are also widely used in hygiene, medical, protective garment, and building and construction markets. Disposable hygiene and medical applications such as baby diapers, adult incontinence products, and breathable barrier surgical gowns require cost effective solutions to achieve high WVTR. Typical levels of breathability are reported to range from 500 g/m2-day to 20,000 g/m2-day depending upon the application and test methods.

Breathable building wraps are designed to protect the interior of a structure from environmental elements, such as rain, wind and dust, during construction, and resist water penetration from the outside through the building wall during the life of the building. Yet, they also must be permeable to water vapor. In particular, moisture buildup within a building structure can result in mold and mildew which can cause aesthetic or structural damage to the building and represent a health hazards for building occupants. Accordingly, water vapor must be able to permeate through the material in order to minimize moisture inside the structure. Typical levels of breathability for these applications are reported to range from 50 g/m²-day to 600 g/m2-day.

Addition of fillers like CaCO₃ into polyethylene has also been used to make to make moisture breathable films of high WVTR, but this requires a post-orientation process, such as machine direction orientation or the use of inter-digitating or inter-meshing rollers, also called "ring rolling", to create cavitation around the filler particles (see for example, WO2007081548 or WO1998004397). Enhanced moisture permeation in such films is a result of microporous morphology. Such films are commonly used hygiene applications for diaper and adult incontinence backsheet films and in medical applications such as breathable but liquid impermeable surgical gowns and can yield WVTR values of greater than 500 g/m²-day and up to 20000 g/m² day, depending upon the level of CaCO₃ and stretching, for films ranging in thickness from 5.08 to 38.1 µm (0.2 to 1.5 mils) thickness. For hygiene applications, films having a thickness of from 5.08 to 15.24 µm (0.2 to 0.6 mils) are preferred.

The orientation process can lead to increased scrap due to the propensity of the films to tear or pinhole at the site of a defect during the orientation process. Hygiene and medical applications require no pinholes in order to prevent leakage of fluids past the barrier, breathable film. As noted in publication "The Role of Calcium Carbonate in Microporous Film Applications by Deeba Ansara, Allison Calhoun, and Paul Merriman, PMA124PL, November 2001, "[Typically] stearic acid coated CaCO₃ is used to enable free-flowing CaCO₃, that is easier to handle, compound, and disperse in the polymer. This coating results in a hydrophobic particle. The orientation process creates microvoids where the polymer separates from the calcium carbonate particles."

Additional issues arise with creating a breathable coating from CaCO₃ filled polyolefin compounds when those compounds are applied to a substrate such as a non-woven or fabric through extrusion coating. Since the polymer coating is applied directly to the non-woven or woven fabric, it becomes dimensionally constrained by the fabric and typically cannot be stretched or oriented to the levels required to achieve microvoiding and the resultant microporosity. Therefore, it is desirable to produce a breathable coating on a non-woven surface without the need for stretching or orientation.

High levels of WVTR may also be achieved using polymers having intrinsically higher level of permeability to moisture. These polymers typically have hydrophilic functional groups exhibit high permeation to water vapor. For example polyamide (nylon) films, are already used in fruit packaging applications. These films do provide high WVTR values (∼ 300g/m²day) combined with toughness and good optics, but compared to polyolefins they are more expensive and tend to be more difficult to process. Moreover, polyamide films require microperforations in order to provide adequate oxygen transmission, since polyamide is a good barrier to oxygen. They also absorb humidity and can get saturated with moisture, resulting in films having a variable permeability depending on humidity. Accordingly, nylon films are not economically feasible (cost-effective) in large volume fresh produce packaging applications.

Other hydrophilic polymers offering high WVTR in films are thermoplastic polyurethanes, multiblock copolymers of polyetheresters and polyetheramides, and water soluble polymers like poly vinylalcohol and poly (ethylene oxide), also referred to as poly (ethylene glycol) at lower molecular weight. Similar to the case of polyamide, these materials are often prohibitively expensive for the desired applications. Further, water solubility of some of these polymers, may present challenges to using them in neat form.

Accordingly, there is still a need for cost effective films of improved WVTR that can be manufactured on conventional blown, cast and extrusion coating film lines, without the need for a post-orientation step to produce microporosity.
In the first aspect of the present invention there is provided the film of claim 1.

The present invention provides a film suitable for applications requiring high water vapor transmission rates. The film comprises a polyolefin polymer together with from 1 to 50 percent by weight of the film of a hydrophilic polymer and from 30 to 85 percent by weight of the film of a filler having a hydrophilic surface functionality. For purposes of the present invention "hydrophilic" polymers may be defined as those containing polar or ionizing functional groups that can participate in hydrogen bonding with water. Hansen's solubility parameter may be used to determine fitness for use for the purpose of the present invention, wherein a Hansen solubility parameter "δ" greater than 18 MPa^{1/2} is considered fit for use. Tabulations of Hansen's solubility parameters are given in the reference, Hansen Solubility Parameters: A User's Handbook by Charles M. Hansen, CRC Press, 1999.

For purposes of the present invention fillers having a hydrophilic surface functionality are particulate-type inorganic or organic fillers that have an affinity towards water, by virtue of the hydrophilicity of the functional groups at the surface. Common fillers used in plastics are mostly hydrophilic, with the exception of a few like talc, which are oleophilic. The fillers for use in the present invention have a water contact angle (as determined by ASTM D7334) of 20° or less, more preferably 0°, or more correctly, below the minimum detectable limit for this method. Surface treatments with coatings or coupling agents that reduce the hydrophilicity may impair the affinity of the hydrophilic polymer to the filler surface, and hence, are not desired.

The films of the present invention have a thickness of 150 µm (microns) (6 mils) or less.

### BRIEF DESCRIPTION OF THE DRAWINGS

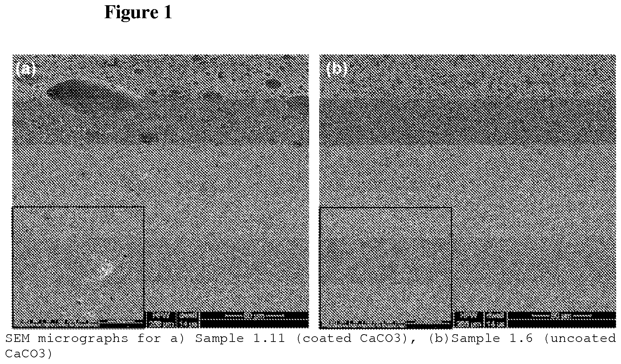

Figure 1 is a set of scanning electron microscope micrographs for a) Sample 1.11 (with coated CaCO₃), (b) Sample 1.6 (with uncoated CaCO₃)

### DETAILED DESCRIPTION OF THE INVENTION

The term "polymer", as used herein, refers to a polymeric compound prepared by polymerizing monomers, whether of the same or a different type. The generic term polymer thus embraces the term "homopolymer", usually employed to refer to polymers prepared from only one type of monomer as well as "copolymer" which refers to polymers prepared from two or more different monomers.

"Polyethylene" shall mean polymers comprising greater than 50% by weight of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single site catalyzed Linear Low Density Polyethylene, including both linear and substantially linear low density resins (m-LLDPE); and High Density Polyethylene (HDPE). These polyethylene materials are generally known in the art; however the following descriptions may be helpful in understanding the differences between some of these different polyethylene resins

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 100 MPa (14,500 psi) with the use of free-radical initiators, such as peroxides (see for example US 4,599,392). LDPE resins typically have a density in the range of 0.916 to 0.940 g/cm³.

The term "LLDPE", includes both resin made using the traditional Ziegler-Natta catalyst systems as well as single-site catalysts such as metallocenes (sometimes referred to as "m-LLDPE"). LLDPEs contain less long chain branching than LDPEs and includes the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). The Linear PE can be made via gas-phase, solution-phase or slurry polymerization or any combination thereof, using any type of reactor or reactor configuration known in the art, with gas and slurry phase reactors being most preferred.

The term "HDPE" refers to polyethylenes having densities greater than about 0.940 g/cm³, which are generally prepared with Ziegler-Natta catalysts, chrome catalysts or even metallocene catalysts.

"Polypropylene" shall mean polymers comprising greater than 50% by weight of units which have been derived from propylene monomer. This includes homopolymer polypropylene, random copolymer polypropylene, impact copolymer polypropylene, and propylene based plastomers and elastomers. These polypropylene materials are generally known in the art.

The following analytical methods are used in the present invention:
Density is determined in accordance with ASTM D792.
"Melt index" also referred to as "MI" or "I₂" is determined according to ASTM D1238 (190°C, 2.16 kg). "Melt index" is generally associated with polyethylene polymers.

Water Vapor Transmission Rate (or WVTR) is the absolute transmission rate, which can be reported, for example, in units of g/m²day. The ranges of WVTR covered in claims are determined according to ASTM F1249-06 using a Mocon W700 measurement device, at 38°C, with relative humidity of 100% on side and 0% on the other. The sample size used for measurements was 5cm2. For cases where high WVTR led to flooding of the sensor, the sample was masked to a smaller surface area of 1.27cm^{2.} WVTR data may be normalized with respect to sample thickness to a permeability coefficient, for example, in units of g 25.4 µm/m²day (g mil/m2day) as used herein. Other methods of measurement have also been used herein in some examples to demonstrate trends in WVTR. (See, for example, "Novel Microporous Films and Their Composities," P.C. Wu, Greg Jones, Chris Shelley, Bert Woelfli, Journal of Engineered Fibers and Fabrics; Volume 2, Issue 1-2007.)

### Components of Compounds, Films or Coatings

The first component of the film is a polyolefin polymer. The polyolefin polymer will comprise from 10% to 94% percent by weight of the film, preferably from 25% to 75%. For purposes of this invention a polymer is derived primarily from a monomer if more than 50% by weight of the polymer is derived from that monomer. The polyolefin polymer is derived primarily from ethylene or propylene monomers. The polyolefin polymer may be a homopolymer or a copolymer. When the polymer is a copolymer, it is preferred that the comonomer be an alpha-olefin having from 2 to 12 carbon atoms, or a carboxylic acid containing moiety such as acrylic acid, methacrylic acid, ethacrylic acid, itaconic acid, maleic acid, fumaric acid and monoesters of such as methyl hydrogen maleate, methyl hydrogen fumarate, ethyl hydrogen fumarate and maleic anhydride. For the polyethylene polymers, if the polymer is a copolymer, preferred comonomers include 1-hexene and 1-octene. For the polypropylene polymers, if the polymer is a copolymer, preferred comonomers include ethylene, 1-butylene, and 1-hexene. Preferred polyolefin polymers include ethylene vinyl acetate copolymers (EVA), ethylene acrylic acid copolymers (EAA), ionomers, ethylene ethyl acrylate copolymers (EEA), ethylene butyl acrylate copolymers (EBA) low density polyethylene (LDPE), Ultra low density polyethylene (ULDPE), very low density polyethylene (VLDPE), linear low density polyethylene (LLDPE), medium density polyethylene (MDPE), high density polyethylene (HDPE), homopolymer polypropylene (hPP), polypropylene random copolymers (RCP), and polypropylene impact copolymers (ICP)., olefin block copolymers (OBC's), propylene-based elastomers or plastomers (PBPEs). For some embodiments it is preferred that the polyolefin polymer has a melting point of at least 110°C, more preferably in the range of from 115°C to 170°C. The properties of the resin such as density, melt index or melt flow rate, amount of comonomer, etc. can be selected depending on the intended use. Preferred melt index ((190°C, 2.16 kg) ranges for polyethylene based films for hygiene and medical application are generally from 0.7-15 g/10 min, preferably from 0.8-7 g/10 min, and preferred density for such applications are generally from 0.90 - 0.96 g/cm³, preferably 0.91-0.95 g/cm³.

In some embodiments it may be beneficial to include more than one polyolefin polymer, such as physical blends of a LLDPE with a LDPE, or other suitable combinations of the polyolefins above. In particular, it may also be advantageous to include up to 1 percent by weight, preferably up to 0.5 percent by weight of maleic anhydride-grafted or other functionalized ethylene copolymers typically used in polyolefin applications (Such polymers may serve to make the base polyolefin polymer more compatible with the polar polymers and fillers described below. In embodiments where the base polymer is already a functional polymer (for example EVA, EAA or EEA copolymers) then the use of a secondary compatablizer may be of less benefit.

The second component of the film is a hydrophilic polymer material. The hydrophilic polymer material comprises from 1 to 50 percent by weight of the film, preferably from 1 to 30 percent by weight of the film, preferably from 5% to 20%. For purposes of the present invention a "hydrophilic polymer" is a polymer with hydrophilic functional groups for example, poly(ethylene glycol) (PEG), analogs of poly(ethylene glycol), poly vinyl alcohol (PVOH), polyvinyl acetate, thermoplastic polyurethane (TPU) and combinations thereof. Hansen's solubility parameter δ may be used as an indicator of hydrophilicity for the purpose of this invention. Preferred polymers will have a value of at least 18MPa^{1/2} for its Hansen solubility parameter, whereas the most preferred polymers will have a solubility parameter above 25MPa^{1/2}. For many embodiments the preferred hydrophilic polymer is polyethylene glycol, particularly polyethylene glycol having a total average molecular weight of at least 200 g/mole, more preferably at least about 500 g/mole, still more preferably at least about 1400 g/mole and less than about 80,000 g/mole, more preferably less than about 20,000 g/mole, and still more preferably less than 8000 g/mole. For embodiments using a thermoplastic polyurethane as the hydrophilic polymer, it is preferred that the TPU have a melt index (190°C, 2.16 Kg) of from 0.1 to 200 g/10min.

The third mandatory component of the films of the present invention is a hydrophilic filler. The hydrophilic filler comprises from 30 to 85 percent by weight of the film, preferably from 30 to 75 percent by weight of the film, more preferably from 35% to 60 %. For purposes of the present invention, a "hydrophilic filler" is a filler having hydrophilic functional groups on its surface. Suitable hydrophilic fillers include CaCO₃, kaolin, mica, talc, feldspar, perlite, diatomaceous earth, silica gels, activated carbons and combinations of two or more of the foregoing, with uncoated CaCO₃ being preferred in some embodiments. It is strongly preferred that the hydrophilic functionality of the filler not be modified with surface coatings, because it is desired that the filler surface has a higher affinity toward the hydrophilic polymer, than toward the non-polar polyolefin matrix. For example, CaCO₃ used in breathable backsheet films is typically coated with stearic acid, which is not desired for this invention.

The filler particle size distribution is selected such that the largest particle size does not exceed the thickness of the film or coating. The source of enhanced WVTR described herein is associated with enhanced moisture permeation enabled by the presence of the hydrophilic polymer - and not with microporosity. As such, the filler is not added to create porosity in stretched films, but rather, it is added to stabilize the dispersion of the hydrophilic polymer in the film, which is strongly incompatible with the polyolefin.

WVTR of films produced according to the invention is tunable, that is, it can be varied over a very broad range by varying the amount and choice of the filler, and hydrophilic polymer in the formulation in order to suit the needs of the intended application. In general higher WVTR is obtained with higher levels of filler and higher levels of hydrophilic polymer. The films of the present invention may preferably exhibit a water vapor transmission greater than 1500 g/m²day and more preferably greater than5,000 g/m²day. For fresh produce applications, less than 1500 g/m²day is desired, and in many such applications from 100 to 1000 g/m²day. For breathable building and construction films WVTR rates of 35 to 300 g/m²day may be preferred. Note that in building and construction applications, water vapor transmission is often discussed in terms of "permeance". Permeance is expressed in terms of grains/ft² *h* in Hg, and thus WVTR can be converted to Permeance (1 grain/ft² h in. Hg* 0.064799 g/ grain *10.764 ft²/m2 * 0.42333 in. Hg * 24h/day = 7.08 g/m² day) The permeance values are measured according to ASTM E96 test conditions. Assuming the conditions of 50% relative humidity, and 74° F, the water vapor pressure is 0.42333 in.Hg.

It is also contemplated that the film or coating may comprise additional layers, either coextruded, or as a laminate. These layers may be selected to provide additional functionality, for example, layers to provide extra strength or gas barrier properties, such as oxygen barrier and carbon dioxide barrier or transmission.

In the case of a breathable barrier diaper backsheet, the film or coating may be a single or multi-layer structure which is joined to a non-woven fabric. Common methods for joining the film to the non-wovens include or bonded hot melt adhesive lamination, ultra-sonic bonding, and thermal bonding through a calendar or nip roll. Common method for applying the coating to the non-wovens is via extrusion coating.

As is generally known in the art, the film of the present invention may also include additives, such as antioxidants (e.g., hindered phenolics such as Irganox® 1010 or Irganox® 1076 supplied by Ciba Geigy), phosphites (e.g., Irgafos® 168 also supplied by Ciba Geigy), cling additives (e.g., PIB), Standostab PEPQ™ (supplied by Sandoz), pigments, colorants, fillers, TiO₂, anti-stat additives, flame retardants, slip additives, antiblock additives, biocides, antimicrobial agents and the like can also be included in the ethylene polymer extrusion composition of the present invention at levels typically used in the art to achieve their desired purpose.

The films or coatings of the present invention may be made using traditional processes. Accordingly, the films may be fabricated via the blown, cast or extrusion coating processes. The films of the present invention will have a total thickness of less than 150, or 125 µm (microns), preferably in the range of from 8-100, and in another embodiment 12-50 µm (microns).

Such films are well suited for fresh produce packaging applications, breathable films used in baby diapers or adult incontinence products, breathable barrier surgical gowns and other hygiene and medical applications. Other applications include breathable building and construction films for house wrap and fabrics for protective garments or sports apparel.

### Examples

### Example 1

Varying formulations with DOWLEX™ 2045G linear low density polyethylene (produced by The Dow Chemical Company, Density = 0.920 g/cc and Melt Index = 1.0 g/10min), and polyethylene glycol PEG CARBOWAX™ 8000 (produced by The Dow Chemical Company, flake form, molecular weight range 7000 to 9000g/mol), having a Hansen solubility parameter of 33 MPa^{1/2}, with either an uncoated CaCO₃ (Omya F-FL grade from Omya Inc. USA, median diameter = 1.4 µm, 60% finer than 2 µm, and 40% finer than 1 µm) or a coated CaCO₃ (Omya FT-FL grade from Omya Inc. USA, coated with calcium stearate, median diameter =1.4 µm, 60% finer than 2 µm and 40% finer than 1 µm) are melt blended at 160 °C for 10 min using a Haake Rheocord mixing bowl (Haake Polylabs Systems). The screw speed is set at 50 rpm. Composition of the blends based on weight is listed in Table I.

Blends are compression molded into about 254 µm (10 mil) samples between two Mylar films using a Carver compression molding press. While samples of this thickness are outside the scope of the present invention, data illustrates the key trends in WVTR. The sample is first preheated at 190 °C for 2 min, followed by compression under the pressure of 1361 kg (3000 lb) for 3 min, 4536 kg (10000 lb) for 3min and 9072 kg (20000 lb) for 1 min. After the compression, the sample is taken out and quenched in another set of cold compression molding platens.

WVTR of the compression molded sheets is tested using a Lyssy L80-4000K equipment at 38 °C, according to ASTM E398-03. The permeation rate of water vapor is measured at relative humidity of 100% on one side and 10% on the other. The area of the sample is 50 cm². Resulting WVTR was expressed as permeability coefficient with units of g 25.4 µm/m²day (g mil/m²day) and are tabulated in Table 1. The sample with 50% CaCO₃ and no PEG (No.1.4) has a permeability coefficient of 9.6 g 25.4 µm/m²day (g mil/m²day). Upon addition of 5 wt% of PEG (No.1.5), the permeability coefficient increases dramatically to 436 g 25.4 µm/ m²day (g mil/m²day). Increasing the PEG content to 15 wt% (No.1.7), increases the permeability coefficient to 2149 g 25.4 µm/ m²day (g mil/m²day). Changing the CaCO₃ level in the formulation at a fixed level of PEG also shows an effect on permeability coefficient of the blends. For example, at 10%PEG level, increasing the CaCO₃ content from 40 to 50 and then 60 wt% (No.1.2, No.1.6 and No. 1.9), results in the permeability coefficients increasing from 1056 to 1315 and then 2213 g 25.4 µm/m²day (g mil/m²day).

The use of coated CaCO₃ in the formulation, rather than uncoated CaCO₃, entirely diminishes the effect of PEG addition on WVTR enhancement, as evident in comparison of data for examples No. 1.4, 1.6 and 1.11. Compared to example No.1.6 prepared with uncoated CaCO₃ with a permeability coefficient of 1315 g 25.4 µm/ m²day (g mil/m²day), at the same formulation ratio, the use of coated CaCO₃, example No. 1.11, reduced the coefficient to 17 g 25.4 µm/ m²day (g mil/m²day), to a level which is comparable to example No. 1.4, which did not have any PEG in the formulation. The observed ineffectiveness of the coated CaCO₃ in enhancing WVTR is attributed to the lack of favorable interaction between the filler and PEG, which leads to coarse droplets of PEG in the resultant morphology, rather than a fine dispersion achieved with the use of uncoated CaCO₃, which interacts favorably with PEG through hydrophilic functionality within a hydrophobic polyolefin matrix.

Morphology of the blends is investigated with a FEI Nova 600 scanning electron microscope (SEM) operated at an accelerating voltage of 5kV, 6 mm working distance. Compression molded sample is microtomed at -120 °C through thickness direction to obtain a smooth cross-section surface. The cross-section surface is then washed with HCl solution (reagent grade, ca 37%) to remove the CaCO₃ and PEG phases before it s coated with iridium and placed onto the SEM sample stage.

Figure 1 shows the morphology of examples No.1.6 and 1.11 after removal of PEG and CaCO₃. While the size scale of the remaining cavities is comparable to that of CaCO₃ for the example No.1.6, large droplet domains missing for the micrograph for the example No. 1.11, is indicative of poor dispersion of PEG in the mixture, leading large PEG domains. Without being bound by any specific theory, the lack of enhancement in WVTR in such formulations with coated CaCO₃ is attributable to lack of connectivity between highly water permeable hydrophilic polymer domains, in an otherwise good moisture barrier material like polyethylene. In contrast, the fine dispersion of PEG attained by use of a filler with a hydrophilic surface functionality, allows much higher permeation of moisture for given amount of PEG in the formulation.

**TABLE I**

| Example No | CaCO₃ OMYA F-FL (UNCOATED) wt% | PEG CARBOWAX™ 8000 wt% | LLDPE DOWLEX™ 2045G wt% | WV permeability coefficient (g 25.4 µm/m²day) ((g mil/m²day)) |
|---|---|---|---|---|
| 1.1 | 40 | 5 | 55 | 207 |
| 1.2 | 40 | 10 | 50 | 1056 |
| 1.3 | 40 | 15 | 45 | 1786 |
| 1.4 (comparative) | 50 | 0 | 50 | 10 |
| 1.5 | 50 | 5 | 45 | 436 |
| 1.6 | 50 | 10 | 40 | 1315 |
| 1.7 | 50 | 15 | 35 | 2149 |
| 1.8 | 60 | 5 | 35 | 868 |
| 1.9 | 60 | 10 | 30 | 2213 |
| 1.10 | 60 | 15 | 25 | 2579 |
| | | | | |

| Example No | CaCO₃ OMYA FT-FL (COATED) wt% | PEG CARBOWAX™ 8000 wt% | LLDPE DOWLEX™ 2045G wt% | WV permeability coefficient (g 25.4 µm/m²day) ((g mil/m²day)) |
|---|---|---|---|---|
| 1.11 (comparative) | 50 | 10 | 40 | 17 |

### Example 2:

DOWLEX™ 2045G (as in Example 1), polyethylene glycol Carbowax™ 1450 (produced by The Dow Chemical Company, flake form, molecular weight range 1305 to 1595g/mol) and uncoated CaCO₃ (Hubercarb Q1 grade supplied by J. M. Huber Corp., USA) of 1.1 micron mean particle size and 95% finer than 4 µm (microns) (both measurements by Sedigraph) are melt compounded and molded into about 254 µm (10 mil) thick samples, per protocol described in Example 1. While films of this thickness are outside the scope of the present invention, the data demonstrates trends of increased WVTR at higher levels of filler. WVTR is measured according to ASTM F1249-06 using a Mocon W700 measurement unit, at 38°C, with relative humidity of 100% on side and 0% on the other. Although the data is not presented in the table, films made with a blend of PEG and the LLDPE but without any filler show no substantial change in WVTR when compared to films comprising only the
LLDPE. Note the data for Example 1 and Example 2 are not directly comparable due to differences in measurement method.

**TABLE II**

| Example No | CaCO₃ HUBERCARB Q1 (UNCOATED) wt% | PEG CARBOWAX™ 1450 wt% | LLDPE DOWLEX™ 2045G wt% | WV permeability coefficient (g 25.4 µm/m²day) ((g mil/m²day)) |
|---|---|---|---|---|
| 2.1(comparative) | 25 | 13 | 62 | 25 |
| 2.2 | 50 | 13 | 37 | 8060 |

Results indicate that CaCO₃ levels up to 25% result in only a marginal increase in WVTR relative to pure polyethylene, despite the presence of 13% of hydrophilic polymer in the formulation. At higher levels of CaCO₃ addition and equal level of PEG, the WVT coefficient increases markedly, at 50% CaCO₃ reaching 8060 (g 25.4 µm/ m²day) g-mil/m²-day. This value is almost an order of magnitude larger than that of targeted nylon control films used in produce packaging, with a reported WV permeability coefficient of about 900 (g 25.4 µm/ m²day) g-mil/m²-day. This example also illustrates that addition of hydrophilic polymer alone is not adequate to raise the WVTR by itself. Rather, the level of CaCO₃ in the formulation is also an important variable to achieve the desired WVTR.

### Example 3: Blown Films

Two formulations using the ingredients described in Example 1 are prepared through twin screw extrusion compounding and made into blown films. Compounding is carried out on a ZSK26 twin screw extruder (L/D=60 and D=26 mm) at a melt temperature of about 280 °C, and an output rate of about 18.1 kg/h (40 lb/h). Formulation ratios are given in Table III. The compounded pellets are dried at 80 °C for about 12h to ensure a residual moisture level no more than 50ppm prior to film extrusion. Monolayer blown films are made on a Killion blown film line equipped with a single screw extruder (D= 3.05 cm (1.2 inch) and L/D=30, throughput of 4.5 kg/hr (10 lb/hr)) and a 7.62 cm (3 inch) diameter die with (70 mil) die gap. The melt temperature is at 162 °C. The blow up ratio is 2.5 and film thickness is approximately 3 mils. Samples are cut from blown films for WVTR measurement. The WVTR results are shown in Table III. WVTR is measured according to ASTM F1249-06 using a Mocon W700 measurement unit, at 38°C, with relative humidity of 100% on side and 0% on the other.

**TABLE III**

| Example No | CaCO₃ OMYA F-FL (UNCOATED) wt% | PEG CARBOWAX™ 8000 wt% | LLDPE DOWLEX™ 2045G wt% | Film Thickness µm (mils) | WV permeability coefficient (g 25.4 µm/m²day) ((g mil/m²day)) |
|---|---|---|---|---|---|
| 3.1 | 55 | 4 | 41 | 71.1 (2.8) | 400 |
| 3.2 | 55 | 12 | 33 | 81.3 (3.2) | 2639 |

### Example 4: Cast Films

The same compounds described in Example 4 are made into cast films, using a Dr. Collin cast film line equipped with a single screw extruder (L/D=25 and D=30mm) and a 30.48 cm (12 inch) wide cast die with 10mil die gap. The output rate is 7.5 kg/h. The melt temperature is about 165 °C. Cast films are made at various thicknesses as indicated in Table 4. WVTR is measured according to ASTM F1249-06 using a Mocon W700 measurement unit, at 38°C, with relative humidity of 100% on side and 0% on the other.

**TABLE IV**

| Example No | CaCO₃ OMYA F-FL (UNCOATED) wt% | PEG CARBOWAX™ 8000 wt% | LLDPE DOWLEX™ 2045G wt% | Film Thickness µm (mils) | WV permeability coefficient (g 25.4 µm/m²day) ((g mil/m²day)) |
|---|---|---|---|---|---|
| 4.1 | 55 | 4 | 41 | 53.3 (2.1) | 614 |
| 4.2 | 55 | 4 | 41 | 104.1 (4.1) | 854 |
| 4.3 | 55 | 12 | 33 | 58.4 (2.3) | 4985 |
| 4.4 | 55 | 12 | 33 | 116.8 (4.6) | 9753 |

### Example 5: Cast Films

Using the same protocol described in Example 4, additional compositions featuring DOWLEX™ 2035G and Dow LDPE 6211 were evaluated. DOWLEX™ 2035G is a linear low density polyethylene (produced by The Dow Chemical Company) of 0.919g/cc density and 6 MI. LDPE 6211 is a high pressure low density polyethylene of 0.918g/cc and 2.3 MI.

**TABLE V**

| Example No | CaCO₃ OMYA F-FL (UNCOATED) wt% | PEG CARBOWAX™ 8000 wt% | LLDPE DOWLEX™ 2035G wt% | LDPE 621I wt% | Film Thickness µm (mils) | WV permeability coefficient (g 25.4 µm/m²day) ((g mil/m²day)) |
|---|---|---|---|---|---|---|
| 5.1 | 40 | 8 | 47 | 5 | 50.8 (2.0) | 309 |
| 5.2 | 55 | 12 | 28 | 5 | 55.9 (2.2) | 4160 |

### Example 6: Blown Films with TPU as hydrophilic polymer

DOWLEX™ 2045G (see example 1) and uncoated CaCO₃ Hubercarb Q1 (see example 2) are compounded with a thermoplastic polyurethane, TPU 2103-70A (sold by Lubrizol), having a Hansen solubility parameter of 20 MPa^{1/2} as the hydrophilic polymer. One formulation is prepared with TPU only, whereas another one contains an additional resin, used as a compatibilizer, AMPLIFY™ GR205. (AMPLIFY™ GR 205 functional polymer is a maleic anhydride (1.2% by weight) grafted high density polyethylene with a resulting MI of 2 MI and a density of 0.960 g/cc.

A 25 mm twin screw extruder made by the Coperion Company is used and it is model ZSK-25 60 L/D. The compounding conditions are shown in Table IV. The compounded pellets are dried at 80 °C for about 12 hours to ensure a residual moisture level no more than 50ppm prior to film extrusion.

Monolayer blown films are made on a Killion blown film line equipped with a single 3.18 cm (1.25 inch) screw extruder, about 4.54 kg/hr (10 lb/hr) throughput and a 7.62 cm (3 inch) diameter die with 1778 µm (70 mil) die gap. The melt temperature is set at 172.8 °C (343 °F). The blow up ratio is 2.5. The films have a thickness of 25.4 to 50.8 µm (1-2 mils); exact film gauge is given in Table V. Samples are cut from blown films for WVTR measurement. The WVT coefficient results are shown in Table 2. WVTR is measured according to ASTM F1249-06 using a Mocon W700 measurement unit, at 38°C, with relative humidity of 100% on one side and 0% on the other.

**TABLE VI**

| Example No | CaCO₃ HUBERCARB Q1 (UNCOATED) wt% | TPU 2103-70A wt% | AMPLIFY™ GR205 wt% | LLDPE DOWLEX™ 2045G wt% | Film Gauge µm (Mils) | WV permeability coefficient (g 25.4 µm/ m²day) ((g mil/m²day)) |
|---|---|---|---|---|---|---|
| 6.1 | 40 | 12 | 0 | 48 | 34.8 (1.37) | 223 |
| 6.2 | 40 | 12 | 2.4 | 45.6 | 39.1 (1.54) | 355 |

There is provided:
1. A formulated compound for enhanced water vapor transmission rate films comprising:
   a) a polyolefin polymer;
   b) from 1 to 50 percent by weight of the film of a hydrophilic polymer; and
   c) from 30 to 85 percent by weight of a filler with a hydrophilic surface functionality.
2. A film suitable for applications requiring enhanced water vapor transmission rates, said film comprising the formulated compound of embodiment 1 and wherein the film has a thickness of 125 µm (microns) or less.
3. The film of embodiment 2 or compound of embodiment 1 wherein the polyolefin polymer is a polyethylene or polypropylene homopolymer or random copolymer or block copolymer.
4. The film of embodiment 2 or compound of embodiment 1 wherein the hydrophilic polymer is selected from the group consisting of poly (ethylene glycol), polyethylene oxide, polypropylene glycols, and copolymers thereof, polyvinyl alcohol, polyvinyl acetate, thermoplastic polyurethane and combinations thereof.
5. The film of embodiment 2 or compound of embodiment 1 wherein the film or compound comprises from 1 to 15 % by weight of the hydrophilic polymer.
6. The film of embodiment 2 or compound of embodiment 1 further comprising a compatabilizer.
7. The film or compound of embodiment 6 wherein the compatabilizer comprises a base resin and the base resin is selected from the group consisting of polyethylene, polypropylene, (homopolymers or copolymers) and ethylene vinyl acetate copolymers.
8. The film of embodiment 7 or compound of embodiment 1 wherein the base resin has been grafted with maleic anhydride and wherein the maleic anhydride content is less than 1% in the final film.
9. The film of embodiment 2 or compound of embodiment 1 wherein the filler is chosen from the group consisting of calcium carbonate, mica, kaolin, clay, perlite, diatomaceous earth, dolomite, magnesium carbonate, calcium sulfate, barium sulfate, glass and ceramic beads, natural and synthetic silica, aluminum trihydroxide, magnesium trihydroxide, wollastonite, whiskers, wood flour, lignine, starch and combinations thereof.
10. The film or compound of embodiment 9 wherein the filler is uncoated calcium carbonate.
11. The film of embodiment 2 or compound of embodiment 1 wherein the filler is present in an amount of from 25 to 75 percent by weight of the film.
12. The film or compound of embodiment 11 wherein the filler is present in an amount of from 30% up to 65%.
13. The film of embodiment 2 or compound of embodiment 1 further comprising one or more additives selected from the group consisting of slip, anti-block, antioxidants, pigments, processing aids, antistats, optical enhancers,
14. The film of embodiment 2 characterized in that the film has a thickness of from 1 to 6 mils and a WVTR of from 100 - 1000 g/m² day WVTR.
15. The film of embodiment 14 having a thickness of from 25.4 to 101.6 µm (1 to 4 mils).
16. The film of embodiment 15 having a thickness of from 25.4 to 50.8 µm (1 to 2 mils).
17. The film of embodiment 2 characterized in that the film has a thickness of 5.1 to 38.1 µm (0.2 to 1.5mil), and a WVTR of from 1000g·/m²/day, up to 20000 g·/m²/day.
18. The film of embodiment 2 characterized in that the film has a thickness of 5.1 to 38.1 µm (0.2 to 1.5mil), and a WVTR of from 100g·/m²/day, up to 150 g·/m²/day.
19. The film of embodiment 2 wherein the film is a cast film
20. The film of embodiment 2 wherein the film is a blown film
21. The film of embodiment 2 wherein the film is extrusion coated on to a substrate.
22. The film of embodiment 2 wherein the film is bonded to a substrate.
23. The film of embodiment 21 where the bonding method is selected from the group consisting of thermal, ultrasonic, or adhesive bonding or combinations thereof.
24. The film of embodiment 20 whereby the substrate is also moisture permeable.
25. The film of embodiment 20 where the substrate is a non-woven or woven fabric.
26. The film of embodiment 2 or the compound of embodiment 1 further comprising one or more additional polymeric materials
27. The use of a film as in embodiment 17 for a hygiene application.
28. The use of a film as in embodiment 18 for a building wrap application.
29. The use of a film as in embodiment 14 for produce packaging.

## Claims

1. A film suitable for applications requiring enhanced water vapor transmission rates, said film comprising a formulated compound comprising:
a) a polyolefin polymer;
wherein the polyolefin polymer is a polyethylene or polypropylene homopolymer or random copolymer or block copolymer;
b) from 1 to 50 percent by weight of the film of a hydrophilic polymer; and
c) from 30 to 85 percent by weight of a filler with a hydrophilic surface functionality and having a water contact angle of 20° or less, and wherein the film has a thickness of 150 µm (microns) or less.

2. The film of claim 1 wherein the hydrophilic polymer is selected from the group consisting of poly (ethylene glycol), polyethylene oxide, polypropylene glycols, and copolymers thereof, polyvinyl alcohol, polyvinyl acetate, thermoplastic polyurethane and combinations thereof.

3. The film of claim 1 wherein the film comprises from 1 to 15 % by weight of the hydrophilic polymer.

4. The film of claim 1 further comprising a compatibilizer.

5. The film of claim 4 wherein the compatibilizer comprises a base resin and the base resin is selected from the group consisting of polyethylene, polypropylene, (homopolymers or copolymers) and ethylene vinyl acetate copolymers.

6. The film of claim 5 wherein the base resin has been grafted with maleic anhydride and wherein the maleic anhydride content is less than 1 % in the final film.

7. The film of claim 1 wherein the filler is chosen from the group consisting of calcium carbonate, mica, kaolin, perlite, diatomaceous earth, dolomite, magnesium carbonate, calcium sulfate, barium sulfate, glass and ceramic beads, natural and synthetic silica, aluminum trihydroxide, magnesium trihydroxide, wollastonite, whiskers, wood flour, lignine, starch and combinations thereof.

8. The film of claim 7 wherein the filler is uncoated calcium carbonate.

9. The film of claim 1 wherein the filler is present in an amount of from 25 to 75 percent by weight of the film.

10. The film of claim 9 wherein the filler is present in an amount of from 30% up to 65%.

11. The film of claim 1 further comprising one or more additives selected from the group consisting of slip, anti-block, antioxidants, pigments, processing aids, antistats, optical enhancers, phosphites, cling additives, pigments, colorants, flame retardants, biocides, and antimicrobial agents.

12. The film of claim 1 **characterized in that** the film has a thickness of from 25.4 to 152.4 µm (1 to 6 mils) and a WVTR of from 100 - 1000 g/m²/day WVTR.

13. The film of claim 1 **characterized in that** the film has a thickness of 5.08 to 38.1 µm (0.2 to 1.5 mil), and a WVTR of from 1000g/m²/day, up to 20000 g/m²/day.

14. The film of claim 1 wherein the film is extrusion coated or bonded to a substrate.

15. The film of claim 14 whereby the substrate is also moisture permeable.

## Patentansprüche

1. Eine Folie, geeignet für Anwendungen, die erhöhte Wasserdampfdurchlässigkeitsraten erfordern, wobei die Folie eine formulierte Verbindung beinhaltet, die Folgendes beinhaltet:
a) ein Polyolefinpolymer;
wobei das Polyolefinpolymer ein Homopolymer oder statistisches Copolymer oder Blockcopolymer von Polyethylen oder Polypropylen ist;
b) zu 1 bis 50 Gewichtsprozent der Folie ein hydrophiles Polymer; und
c) zu 30 bis 85 Gewichtsprozent einen Füllstoff mit einer hydrophilen Oberflächenfunktionalität und einem Wasserkontaktwinkel von 20° oder weniger, und wobei die Folie eine Dicke von 150 µm (Mikrometer) oder weniger aufweist.

2. Folie gemäß Anspruch 1, wobei das hydrophile Polymer ausgewählt ist aus der Gruppe, bestehend aus Poly(ethylenglycol), Polyethylenoxid, Polypropylenglycolen und Copolymeren davon, Polyvinylalkohol, Polyvinylacetat, thermoplastischem Polyurethan und Kombinationen davon.

3. Folie gemäß Anspruch 1, wobei die Folie zu 1 bis 15 Gew.-% das hydrophile Polymer beinhaltet.

4. Folie gemäß Anspruch 1, ferner beinhaltend einen Verträglichkeitsvermittler.

5. Folie gemäß Anspruch 4, wobei der Verträglichkeitsvermittler ein Basisharz beinhaltet und das Basisharz ausgewählt ist aus der Gruppe, bestehend aus Polyethylen, Polypropylen, (Homopolymeren oder Copolymeren) und Ethylenvinylacetat-Copolymeren.

6. Folie gemäß Anspruch 5, wobei das Basisharz mit Maleinsäureanhydrid gepfropft worden ist und wobei der Maleinsäureanhydridgehalt in der fertigen Folie weniger als 1 % beträgt.

7. Folie gemäß Anspruch 1, wobei der Füllstoff ausgewählt ist aus der Gruppe, bestehend aus Calciumcarbonat, Glimmer, Kaolin, Perlit, Diatomeenerde, Dolomit, Magnesiumcarbonat, Calciumsulfat, Bariumsulfat, Glas- und Keramikperlen, natürlichem und synthetischem Siliciumdioxid, Aluminiumtrihydroxid, Magnesiumtrihydroxid, Wollastonit, Whiskern, Holzmehl, Lignin, Stärke und Kombinationen davon.

8. Folie gemäß Anspruch 7, wobei der Füllstoff unbeschichtetes Calciumcarbonat ist.

9. Folie gemäß Anspruch 1, wobei der Füllstoff in einer Menge von 25 bis 75 Gewichtsprozent der Folie vorhanden ist.

10. Folie gemäß Anspruch 9, wobei der Füllstoff in einer Menge von 30 % bis zu 65 % vorhanden ist.

11. Folie gemäß Anspruch 1, ferner beinhaltend ein oder mehrere Additive, die ausgewählt sind aus der Gruppe, bestehend aus Gleitadditiven, Antiblockieradditiven, Antioxidantien, Pigmenten, Verarbeitungshilfen, Antistatika, optischen Verstärkern, Phosphiten, Haftadditiven, Pigmenten, Farbstoffen, Flammschutzmitteln, Bioziden und antimikrobiellen Mitteln.

12. Folie gemäß Anspruch 1, **dadurch gekennzeichnet, dass** die Folie eine Dicke von 25,4 bis 152,4 µm (1 bis 6 mil) und eine WVTR von 100-1000 g/m²/Tag WVTR aufweist.

13. Folie gemäß Anspruch 1, **dadurch gekennzeichnet, dass** die Folie eine Dicke von 5,08 bis 38,1 µm (0,2 bis 1,5 mil) und eine WVTR von 1000 g/m²/Tag bis zu 20 000 g/m²/Tag aufweist.

14. Folie gemäß Anspruch 1, wobei die Folie auf ein Substrat extrusionsaufgelagert oder daran gebunden ist.

15. Folie gemäß Anspruch 14, wobei das Substrat ebenfalls feuchtigkeitsdurchlässig ist.

## Revendications

1. Un film approprié pour des applications nécessitant des taux de transmission de vapeur d'eau améliorés, ledit film comprenant un composé formulé comprenant :
a) un polymère polyoléfine ;
dans lequel le polymère polyoléfine est un copolymère à blocs ou copolymère aléatoire ou homopolymère polyéthylène ou polypropylène ;
b) de 1 à 50 pour cent en poids du film d'un polymère hydrophile ; et
c) de 30 à 85 pour cent en poids d'une charge avec une fonctionnalité de surface hydrophile et ayant un angle de contact avec l'eau de 20° ou moins, et le film ayant une épaisseur de 150 µm (microns) ou moins.

2. Le film de la revendication 1 dans lequel le polymère hydrophile est sélectionné dans le groupe constitué du poly(éthylène glycol), du poly(oxyde d'éthylène), des polypropylène glycols, et des copolymères de ceux-ci, du poly(alcool vinylique), du poly(acétate de vinyle), du polyuréthane thermoplastique et des combinaisons de ceux-ci.

3. Le film de la revendication 1, le film comprenant de 1 à 15 % en poids du polymère hydrophile.

4. Le film de la revendication 1 comprenant en outre un agent de compatibilité.

5. Le film de la revendication 4 dans lequel l'agent de compatibilité comprend une résine de base et la résine de base est sélectionnée dans le groupe constitué du polyéthylène, du polypropylène, (homopolymères ou copolymères) et de copolymères d'éthylène-acétate de vinyle.

6. Le film de la revendication 5 dans lequel la résine de base a été greffée avec de l'anhydride maléique et dans lequel la teneur en anhydride maléique est inférieure à 1 % dans le film final.

7. Le film de la revendication 1 dans lequel la charge est choisie dans le groupe constitué du carbonate de calcium, du mica, du kaolin, de la perlite, de la terre de diatomée, de la dolomite, du carbonate de magnésium, du sulfate de calcium, du sulfate de baryum, de billes de verre et de céramique, de silice naturelle et synthétique, du trihydroxyde d'aluminium, du trihydroxyde de magnésium, de la wollastonite, de trichites, de la farine de bois, de la lignine, de l'amidon et de combinaisons de ceux-ci.

8. Le film de la revendication 7 dans lequel la charge est du carbonate de calcium non revêtu.

9. Le film de la revendication 1 dans lequel la charge est présente dans une quantité allant de 25 à 75 pour cent en poids du film.

10. Le film de la revendication 9 dans lequel la charge est présente dans une quantité allant de 30 % jusqu'à 65 %.

11. Le film de la revendication 1 comprenant en outre un ou plusieurs additifs sélectionnés dans le groupe constitué d'un agent glissant, d'un agent anti-adhérent, d'antioxydants, de pigments, d'auxiliaires de fabrication, d'agents antistatiques, d'amplificateurs optiques, de phosphites, d'additifs collants, de pigments, de colorants, de retardateurs de flamme, de biocides, et d'agents antimicrobiens.

12. Le film de la revendication 1 **caractérisé en ce que** le film a une épaisseur allant de 25,4 à 152,4 µm (1 à 6 mils) et un taux de transmission de vapeur d'eau (WVTR) allant de 100 à 1 000 g/m²/jour WVTR.

13. Le film de la revendication 1 **caractérisé en ce que** le film a une épaisseur allant de 5,08 à 38,1 µm (0,2 à 1,5 mil), et un WVTR allant de 1 000 g/m²/jour, jusqu'à 20 000 g/m²/jour.

14. Le film de la revendication 1, le film étant revêtu par extrusion sur un substrat ou lié à un substrat.

15. Le film de la revendication 14, le substrat étant aussi perméable à l'humidité.
